# EUROPEAN PATENT APPLICATION

(11) **EP 2 747 367 A1**
(43) Date of publication of application: **25.06.2014**
(21) Application number: 12306611.0
(22) Date of filing: 18.12.2012
(51) Int. Cl.: H04L 29/06, H04L 29/08

(54) **Multimedia communication session control**

(71) Applicant: Alcatel Lucent, 75007 Paris (FR)
(72) Inventor: Van Broeck, Sigurd, 2980 Zoersel (BE); Lou, Zhe, 2640 Mortsel (BE); Van den Broeck, Marc, 2860 Sint-Katelijne-Waver (BE)
(74) Representative: ALU Antw Patent Attorneys

(57) **Abstract**

The present invention relates to Multimedia communication session control method for controlling a multiparty multimedia communication session between a plurality of remote Multimedia Communication devices over a communications network where the communications network couples each Multimedia Communication device of said plurality Multimedia Communication devices. Each multimedia Communication device of the plurality of Multimedia Communication devices being involved in the communications session being positioned and presented in a layout of a virtual representation of a virtual room, said method further comprises the steps of a first Multimedia Communication device of the plurality Multimedia Communication devices detecting a trigger and based on the trigger and the layout of a virtual representation of the virtual room, selecting at least one further Multimedia Communication device for establishing a secondary multimedia communications session between the first communication device and the at least one further communication device of the plurality communication devices.

## Description

The present invention relates to the field of Remote Multimedia communication session control.

According to embodiments, the invention relates to a Remote Multimedia communication session control Method for controlling/establishing a multiparty multimedia communication session between a plurality of remote Multimedia Communication devices over a communications network where the communications network couples each Multimedia Communication device of the plurality Multimedia Communication devices.

Such a multimedia communication session may be an audio conference meeting, a video conference meeting, a remote classroom session, a remote presentation, a brainstorm using Google hang-outs, etc

Such Multimedia Communication device may be an internet connected personal computer including a camera, a microphone, a speaker a display or any other multimedia communications device such as a Smartphone, a tablet computer.

Currently, in order to discuss issues outside the ongoing remote multimedia session a separate phone session or chat session can be set-up if the destination mobile phone number and or chat-identifcation are known to the participant of the remote multimedia session that intend to initiate some discussion.

Currently it is not possible for a first participant of an ongoing multimedia communication session to easily select a further participant of the ongoing multimedia communication session for additionally participating in a secondary communication session where a first and a second participant are not always in the same location.

An objective of the present invention is to provide a multimedia communication session control method of the above known type but wherein a first participant of an ongoing multimedia communication session is enabled to easily select a further participant of the ongoing multimedia communication session for additionally participating in a secondary communication session with the first participant.

According to an embodiment of the invention there is provided a remote Multimedia communication session control method for controlling/establishing a multiparty multimedia communication session between a plurality of remote Multimedia Communication devices over a communications network where the communications network coupling each Multimedia Communication device of the plurality Multimedia Communication devices, each Multimedia Communication device of said plurality of Multimedia Communication devices being involved in said communications session being positioned and presented in a layout of a virtual representation of a virtual room.

The method further comprises the steps of a first Multimedia Communication device of the plurality of multimedia Communication devices, detecting a trigger of a user of the Multimedia Communication devices and based on the trigger and the layout of a virtual representation of the virtual room, selecting at least one further Multimedia Communication device.

In this way, by first a Multimedia Communication device of the plurality Multimedia Communication device being involved in an ongoing multimedia communication session, first detecting a first trigger of a user of the first Multimedia Communication device and subsequently based on this first detected trigger in combination with the layout of a virtual representation of the virtual room each participant to the multimedia communication session is in, at least one further Multimedia Communication device for establishing a secondary multimedia communications session between said first communication device and the at least one further communication device of the plurality of communication devices is selected.

In this way, by detecting a trigger at the first communications device of a first user where such a trigger may be a "lean over" body movement of this first user whose lean-over may be detected at a camera of such communications device. Alternatively, such a trigger may be a hand gesture, another body gesture like head-nod or even other kinds of gestures where each of such gesture indicates a direction left or right etc..

This direction derived from the gesture may be interpreted in combination with layout of a virtual representation of the virtual room, in which layout each participant of the ongoing multimedia communication session is assigned a fixed location. Hence the gesture of the first user indicates at least one further participant of the ongoing multimedia communication session for selection to participate in a secondary communication session. Such a trigger alternatively may be keyboards arrow keys or any other means for indicating some direction relative to the user device where the trigger is detected.

According to another preferred embodiment, a session control node initiating the establishment of a secondary multimedia communications session between the first multimedia communication device and the at least one further Multimedia Communication device which is selected.

The "initiating the establishment of a secondary multimedia communications session" may include the necessary signaling for factually establishing the communications session, or may signify the factual establishment of a communications session having first parameters like the lean-over direction of the user, or the identity of the second user that the first user is leaning over to. Alternatively the "initiating the establishment of a secondary multimedia communications session" may be the establishing of a Medium quality audio connection (connection with first parameters) or an additional low quality audio connection (connection with second connection parameters) between the at least one further Multimedia Communication device which is selected and the neighbors in the layout of a virtual representation of the virtual room, or an additional low quality audio connection between the first multimedia communication device and the neighbors in the layout of a virtual representation of the virtual room.

According to a further preferred embodiment, the session control node finally establishes the secondary multimedia communications session, over the communications network, between the first Multimedia Communication devices and the at least one further Multimedia Communication device which is selected at detection by the at least one further Multimedia Communication device of a second trigger.

In this way, by detecting a second trigger at the at least one further Multimedia Communication device where such a trigger may be a "lean over gesture" of a user which leans over, may be detected by a camera of such at least one further multimedia communications device, such user of the at least one further multimedia communications device acknowledges that a secondary multimedia communication session actually can be established. At receipt of the second trigger the session control node then actually establishes a high quality secondary multimedia communication session (with third parameters), connecting the first Multimedia Communication device and the at least one further Multimedia Communication device selected and where the second trigger is detected subsequently.

Alternatively, such second trigger may be a hand gesture, another body gesture like head-nod or even other kinds of gestures where each of such gesture indicates a direction left or right etc.

This direction derived from the gesture may be interpreted in combination with the layout of a virtual representation of the virtual room, in which layout each participant of the ongoing multimedia communication session is assigned a fixed location. Hence the gesture of the first user indicates at least one further participant of the ongoing multimedia communication session for selection to participate in a secondary communication session. Such a trigger alternatively may be keyboards arrow keys or any other means for indicating some direction relative to the user device where the trigger is detected.

Furthermore, in an alternative embodiment an already established medium quality audio connection between the first multimedia Communication device and the at least one further Multimedia Communication User 2 (set up during the phase of initiating the establishment of the connection) is changed by the session control node, into a high quality audio connection at detection of the second trigger.

In a second alternative embodiment, the additional low quality audio connection between User 2 and his neighbors set up during the phase of initiating the establishment of the connection) changes into a medium quality audio connection at detection of the second trigger.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig.1 represents a schematic diagram of the system for Multimedia communication session control, including a session control node SCN and a plurality of remote Multimedia Communication devices CD1, CD2, CD3 and CD4;
Fig. 2 represents a schematic diagram of Multimedia Communication devices CD1;

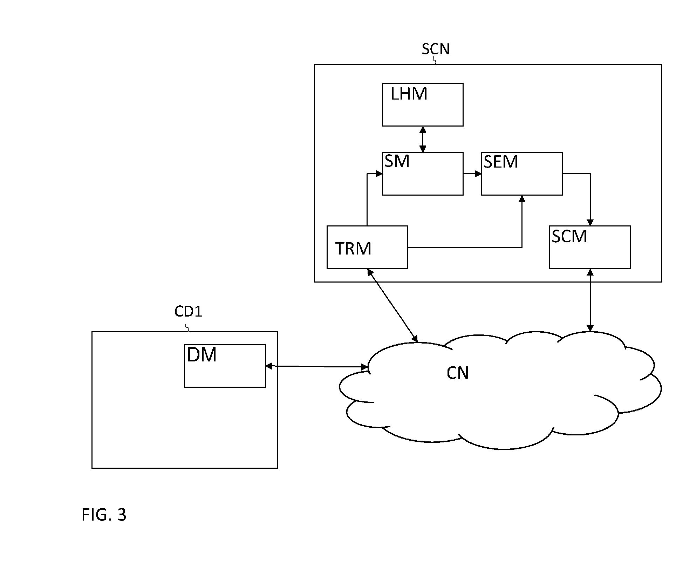

Fig. 3 represents a functional diagram of the session control node SCN and a coupled multimedia communications device.
Fig. 4 represents of the virtual representation of the virtual room as is presented (not all remote Multimedia Communication devices corresponding to users presented in Fig 4 are presented in Fig.1).

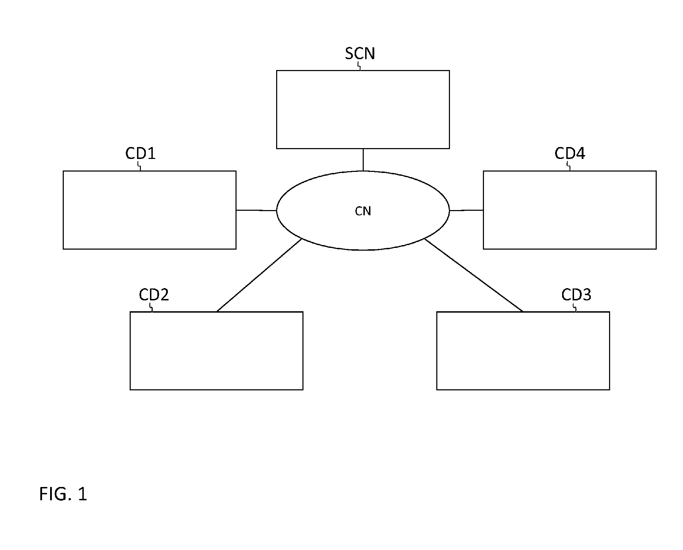

In the following paragraphs, referring to the drawing in FIG.1, an implementation of the system for Multimedia communication session control is described. In the second paragraph, all connections between session control node SCN and a plurality of remote Multimedia Communication devices are defined.

Subsequently all relevant functional means of the session control node SCN and remote Multimedia Communication devices CD1 as presented in FIG.1 are described followed by a description of all interconnections. In the succeeding paragraph the actual execution of the system for Multimedia communication session control communication system is described.

The system for multimedia communication session control comprises a session control node SCN for controlling a multiparty multimedia communication session between a plurality of remote Multimedia Communication devices CD1, CD2, CD3 and CD4 which are included in the system. The system further comprises a plurality of remote Multimedia Communication devices CD1, CD2, CD3 and CD4. Although in this embodiment only a small number of remote Multimedia Communication devices is described for sake of clarity usually a larger number of such remote Multimedia Communication devices are present in such system.

Each of the multimedia Communication devices and the session control node SCN are interconnected over a communications network. Such communications network may include a core internet network in concatenation with an access network and or a home network including wired and/or wireless connections.

Alternatively, in case the media client MC is a mobile device the communications network includes wireless network interfaces like GSM, UMTS, LTE, WIFI, Bluetooth, etc. or other suitable communications networks.

The session control node SCN first comprises a trigger reception means TRM that is adapted to receive a first and second trigger and or possibly further triggers detected at the each of the multimedia Communication devices CD1, CD2, CD3 and additionally a selecting means SM that is adapted to select based on a first trigger detected by the first Multimedia Communication devices CD1 in combination with such layout of a virtual representation of the virtual room, at least one further Multimedia Communication device CD2, CD3 for establishing a secondary multimedia communications session between said first communication device CD1 and the at least one further communication device CD2, CD3 of the plurality communication devices.

Additionally the session control node SCN comprises a lay-out maintaining means LMM that is able to maintain the current position of each Multimedia Communication device of said plurality of Multimedia Communication devices CD1, CD2, CD3, and CD4 being involved in the communications session is positioned and presented in a layout of a virtual representation of a virtual room. The session control node SCN further comprises an initiation means IM that is adapted to initiate the establishment of a secondary multimedia communications session between the first Multimedia Communication devices CD1 and at least one further selected Multimedia Communication device CD2 and an optional session establishment means SEM that is adapted to establish the secondary multimedia communications session, over the communications network, between the first Multimedia Communication devices CD1 and the at least one further Multimedia Communication device CD2 at detection of a second trigger by the at least one further Multimedia Communication device CD2. Further, the session control node SCN includes a session control means SCM adapted to control the session management.

The session control node SCN has an input-terminal that is at the same time an input-terminal of the trigger reception means TRM that is coupled to the selection means SM which in turn is coupled to the lay out maintaining means LMM. The selecting means further is coupled to the initiation means IM that is coupled to the session establishment means SEM. The session establishment means SEM further is coupled to the session control means SCM that has an input/output that is at the same time an input/output terminal of the session control node SCN.

The first Multimedia Communication device CD1 comprises a detecting means TDM that is adapted to detect a trigger of a user of the Multimedia Communication devices CD1. Such a detecting means may be a camera, a motion sensor a microphone with or possibly in combination with others kinds of sensors.

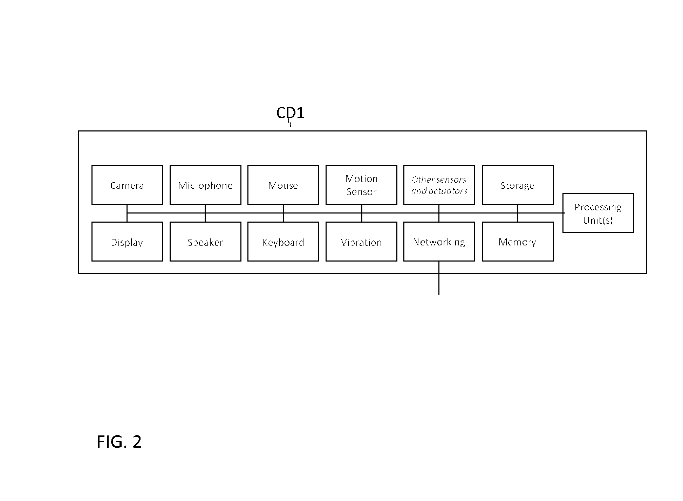

Such Multimedia Communication device CD1 further may, as shown in Fig. 2 comprise a display, microphone, speaker, a camera, a mouse, keyboard, a vibration device is actually used to notify an event happening such as for instance, setting vibration for incoming calls if a mobile is in silent mode and may include a storage and a processing unit.

It is to be noted that the further Multimedia Communication devices CD2, CD3, CD4 have similar structure and means.

In order to explain the execution of the present invention it is assumed that a first user with an associated multimedia communication device CD1, currently attends a first remote multimedia communications session like a videoconference call, wherein additionally other users with associated Communication devices CD2, CD3 and CD4 and possible other, multimedia communication devices, not shown in any of the figures are involved in.

Further, it is assumed that this first user during the first ongoing multimedia communications session may wish to discuss an issue with a second user, being his colleque working at home, where the second user is involved in the same multimedia communications session from another location.

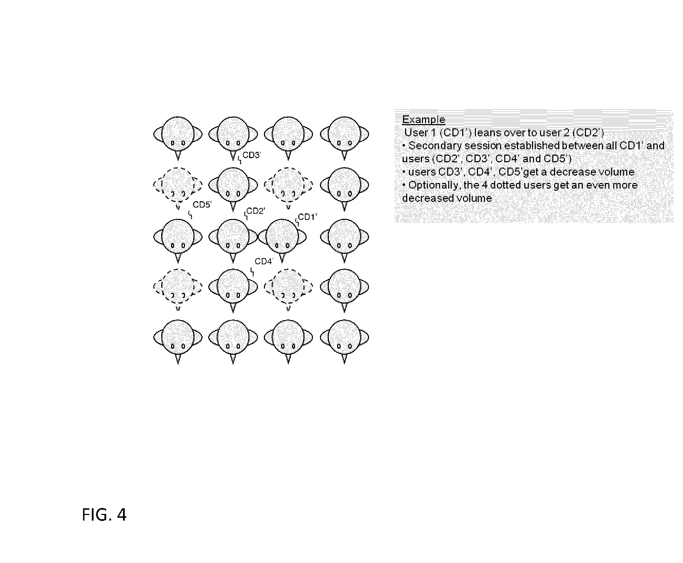

Fig 4 presents the maintained by the lay-out maintaining means LMM that holds and updates the current position of each Multimedia Communication device of said plurality of Multimedia Communication devices CD1, CD2, CD3, and CD4 being involved in the communications session is positioned and presented in a layout of a virtual representation of a virtual room.

The first user CD1 in order to a set-up a communications session with the second user CD2 being associated with multimedia communications device CD2, leans over to this second user CD2, hence he leans to the right. Subsequently, the camera of Multimedia Communication devices CD1, detects a right lean-over action being the trigger signal from [left/right/forward/backward] of User CD1. The multimedia Communication devices CD1 sends the first trigger signal, i.e. the right lean-over action to the session control node SCN where the trigger reception means TRM receives the first trigger signal, i.e. the right lean over action. Subsequently the trigger reception means TRM forwards the first trigger signal to the selecting means SM that subsequently selects based on the first trigger signal detected by the camera of the first Multimedia Communication devices CD1, i.e. the right lean-over action, in combination with the layout of the virtual representation of the virtual room, as presented in Fig.4, at least one further Multimedia Communication device CD2, CD3 for establishing a secondary multimedia communications session between said first communication device CD1 and the second communication device CD2 of the plurality communications devices. The second communications device CD2 is selected as user CD1 makes a right lean over action which is detected by the camera and interpreted as user CD1' is pointing at user CD2' as user CD2' is positioned at the right side of user CD1, hence user CD1 intends to establish a communications session with user CD2'. Subsequently the selecting means hands over an identifier of the selected user device associated with the selected second user CD2' to the initiation means IM of the session control node SCN to initiate the establishment of a secondary multimedia communications session between the first Multimedia Communication device CD1 and the selected Multimedia Communication device CD2. The initiation of the communication session may entail the sending of a notification signal to the second multimedia communications device CD2 of an incoming communication session request which may be presented visually, audibly or with vibrations. Alternatively a secondary communications session with medium quality audio between User CD1' and the second user CD2' is establised by which established communications session the user is notified of the intent of the first user CD1'.

If the second user CD2' subsequently intends to accept the incoming communication session request, the second user leans over to the first user CD1', hence leans to the left. Subsequently, the camera of Multimedia Communication devices CD2, detects a left lean-over action being the trigger signal from [left/right/forward/backward] User CD2'. The multimedia Communication device CD2 sends the first trigger signal, i.e. the left lean-over action to the session control node SCN where the trigger reception means TRM receives the second trigger signal, i.e. the left lean over action.

Subsequently the trigger reception means TRM forwards the second trigger signal to the session establishment means SEM that at receipt of the second trigger, i.e. the left lean-over action, being interpreted by the session establishment means SEM as an acknowledgement of the second user CD2' to establish a secondary multimedia communications session with the first multimedia Communication device CD1, the session establishment means SEM factually instructs the a session control means SCM to control establish the secondary multimedia communications session involving the first multimedia Communication device user CD1 and the second multi-media Communication devices CD2 with high quality audio.

Alternatively a secondary communications session with medium quality audio between User CD1' and the second user CD2' already establised (during the phase of initiating the establishment of the connection) is under control of the session control means SCM modified into a multimedia communications session involving the first multimedia Communication device user CD1 and the second multimedia Communication devices CD2 with high quality audio.

In an alternative embodiment the initiation means IM of the session control node SCN additionally initiates the establishment of a an additional secondary multimedia communications session between the second Multimedia Communication device CD2 and the multimedia Communication devices of respective neighboring users like users 3, 4 and 5 where this secondary multimedia communications session is a low quality communication session.

In a further alternative embodiment the session establishment means SEM factually instructs the session control means SCM to change the additional low quality audio connection between User 2 and the neighbors e.g. being users CD3', CD4' and CD5 (as set up during the phase of initiating the establishment of the connection) into a audio connection with medium audio quality.

In a further alternative embodiment the session using the camera of the multimedia Communication devices CD1 detects a third trigger signal e.g. being the end of lean-over i.e.a backward lean action [left/right/forward/backward] of User 1 whereupon the detection means DM of multimedia Communication devices CD1 sends this third trigger to the trigger reception means TRM that forwards the third trigger signal to the session establishment means SEM that at receipt of the third trigger, i.e. the backward lean-over action, being interpreted by the session establishment means SEM as an acknowledgement of the first user 1 to release the established secondary multimedia communications session with the second multimedia Communication device CD2, the session establishment means SEM factually instructs the a session control means SCM to control release the secondary multimedia communications session involving the first multimedia Communication device user CD1 and the second multi-media Communication devices CD2 with high quality audio.

The trigger signal can be implemented by means of a lean-over gesture [left/right/forward/backward] and optionally may be complimented by other gestures such as:
Lean over + [double] click [and hold] key on keyboard (or mouse) before lean-over event is send to System Control
Lean over + [double] click [or touch] dedicated area (button) on screen before lean-over event is send to System Control
Lean over + hold for a number of milliseconds before lean-over event is send to System Control
Lean over + hold half-open hand near mouth before lean-over event is send to System Control
Lean over + head-nod before lean-over event is send to System Control

The lean-over gesture can be complimented by other gestures on a secondary control application on primary System, e.g. System 1 of User 1
Lean over + [double] click [or touch] dedicated area (button) on screen of secondary application before lean-over event is send to System Control

In a further alternative embodiment such trigger signal e.g. could be implemented by key strokes of the keyboard of the multimedia communications device.

The initial low/medium conference connection of the call setup can be complimented by

A visual indication on the screen of CD2
- A [short] ring tone of
- A [short] vibration
- The stable medium/high conference connection of the call setup can be complimented by
   - A visual indication on the screen of participants
   - A [short] connection tone
   - A [short] vibration of
- The connection release of the call release can be complimented by
   - The removal of the visual indication on the screen of
   - A [short] release tone
   - A [short] vibration of

Such a multimedia session may be an audio conference meeting, a video conference meeting, a remote classroom session, a remote presentation, a brainstorm using Google hang-outs, etc.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Multimedia communication session control method for controlling/establishing a multiparty multimedia communication session between a plurality of remote Multimedia Communication devices (CD1, CD2, CD3, CD4) over a communications network (CN), said communications network coupling each Multimedia Communication device of said plurality Multimedia Communication devices (CD1, CD2, CD3, CD4), **CHARACTERISED IN THAT** each Multimedia Communication device of said plurality of Multimedia Communication devices being involved in said communications session being positioned and presented in a layout of a virtual representation of a virtual room, said method further comprises the steps of
a. a first Multimedia Communication device (CD1) of said plurality Multimedia Communication devices (CD1, CD2, CD3, CD4), detecting a trigger of a user of said Multimedia Communication devices (CD1); and
b. based on said trigger and said layout of a virtual representation of said virtual room, selecting at least one further Multimedia Communication device (CD2, CD3, CD4) for establishing a secondary multimedia communications session between said first communication device (CD1) and said at least one further communication device (CD2, CD3, CD4) of said plurality communication devices.

2. Multimedia communication session control Method according to claim 1, **CHARACTERISED IN THAT** said method further comprises the step of c. a control network node (CNN) initiating the Establishment of a secondary multimedia communications session between said first Multimedia Communication devices (CD1) and said at least one further Multimedia Communication device (CD2) selected.

3. Multimedia communication session control Method according to claim 2, **CHARACTERISED IN THAT** said method further comprises the step of d. establishing said secondary multimedia communications session, over said communications network, between said first Multimedia Communication devices (CD1) and said at least one further Multimedia Communication device (CD2) at detection by said at least one further Multimedia Communication device (CD2) of a second trigger.

4. System for Multimedia communication session control, said system comprising a control network element (CNE) for controlling a multiparty multimedia communication session between a plurality of remote Multimedia Communication devices (CD1, CD2, CD3, CD4) included in said system, all interconnected over a communications network **CHARACTERISED IN THAT** each Multimedia Communication device of said plurality of Multimedia Communication devices being involved in said communications session is positioned and presented in a layout of a virtual representation of a virtual room, said system further comprises:
a. detecting means (TDM) in a first Multimedia Communication device (CD1) of said plurality Multimedia Communication devices (CD1, CD2, CD3, CD4), adapted to detect a trigger (of a user of said Multimedia Communication devices (CD1); and
b. selecting means (SM) adapted to based on said trigger and said layout of a virtual representation of said virtual room, select at least one further Multimedia Communication device (CD2, CD3, CD4) for establishing a secondary multimedia communications session between said first communication device (CD1) and said at least one further communication device (CD2, CD3) of said plurality communication devices.).

5. System for multimedia communication session control according to claim 4, **CHARACTERISED IN THAT** said system further comprises:
c. initiation means (IM) adapted to initiate the Establishment of a secondary multimedia communications session between said first Multimedia Communication devices (CD1) and said at least one further Multimedia Communication device (CD2) selected.

6. System for multimedia communication session control according to claim 5, **CHARACTERISED IN THAT** said system further comprises:
d. session establishment means (SEM), adapted to establishing said secondary multimedia communications session, over said communications network, between said first Multimedia Communication devices (CD1) and said at least one further Multimedia Communication device (CD2) at detection by said at least one further Multimedia Communication device (CD2) of a second trigger.

7. Session control node (SCN) for use in a system for Multimedia communication session control, said system comprising said session control node (SCN) for controlling a multiparty multimedia communication session between a plurality of remote Multimedia Communication devices (CD1, CD2, CD3, CD4) included in said system, all interconnected over a communications network **CHARACTERISED IN THAT** each Multimedia Communication device of said plurality of Multimedia Communication devices being involved in said communications session is positioned and presented in a layout of a virtual representation of a virtual room, said Session control node (SCN) further comprises:
a. a selecting means (SM) adapted to select based on a first trigger detected by said first Multimedia Communication devices (CD1) and said layout of a virtual representation of said virtual room, at least one further Multimedia Communication device (CD2, CD3) (for establishing a secondary multimedia communications session between said first communication device (CD1) and said at least one further communication device (CD2, CD3, CD4) of said plurality communication devices.).

8. Session control node (SCN) according to claim 7, **CHARACTERISED IN THAT** said Session control node (SCN) for further comprises:
c. initiation means (IM) adapted to initiate the Establishment of a secondary multimedia communications session between said first Multimedia Communication devices (CD1) and said at least one further Multimedia Communication device (CD2) selected.

9. Session control element (SCN) according to claim 8, **CHARACTERISED IN THAT** said Session control element (SCN) further comprises:
d. session establishment means (SEM), adapted to establishing said secondary multimedia communications session, over said communications network, between said first Multimedia Communication devices (CD1) and said at least one further Multimedia Communication device (CD2) at detection of a second trigger by said at least one further Multimedia Communication device (CD2).

10. Session control node (SCN) according to claim 8, **CHARACTERISED IN THAT** said initiate the Establishment of a secondary multimedia communications session is between said first Multimedia Communication devices (CD1) and said at least one further Multimedia Communication device (CD2) selected.
